# EUROPEAN PATENT SPECIFICATION

(11) **EP 4 103 519 B1**
(45) Date of publication and mention of the grant of the patent: **01.05.2024**
(21) Application number: 21704561.6
(22) Date of filing: 12.02.2021
(51) Int. Cl.: C02F 1/52, C02F 1/68, A01K 1/00, A01K 1/01, C02F 101/16, C02F 103/20

(54) **REDUCTION OF AMMONIA EMISSION FROM LIVESTOCK HOUSING**
VERMINDERUNG DER AMMONIAKEMISSIONEN AUS STALLHALTUNG
RÉDUCTION D'ÉMISSIONS D'AMMONIAC PROVENANT DE BÂTIMENTS D'ÉLEVAGE

(30) Priority: 14.02.2020 NL 2024904
(43) Date of publication of application: 21.12.2022
(73) Proprietor: van Schilt, Jacobus Antonius Cornelis, 4751 EM Oud Gastel (NL)
(72) Inventor: van Schilt, Jacobus Antonius Cornelis, 4751 EM Oud Gastel (NL)
(74) Representative: EP&C
(86) International application number: PCT/EP2021/053522
(87) International publication number: WO 2021/160842

(56) References cited:
- EP-A1- 0 424 596
- EP-A1- 2 236 024
- WO-A1-2019/117710
- US-B1- 6 382 133
- US-B1- 6 530 343

## Description

The present invention relates to a method for reducing emission of ammonia from a livestock housing facility.

### Background Art

Livestock on farms produce a lot of manure, and therefore a lot of ammonia. For example, dairy cows on average secrete in milk about 25 to 35 percent of the nitrogen they consume, whereas the remaining nitrogen is excreted in manure (urine and faeces). About half of the excreted nitrogen is in the urine, and approximately 60-80 percent of this nitrogen in urine is in the form of urea.

Nitrogen in manure can be converted to ammonia by bacterial degradation. The primary mechanism for this is by the conversion of urinary urea to ammonia. Urease, an enzyme produced by microorganisms in faeces, reacts with urinary urea to form ammonia. Urease activity in faeces is high and rapidly converts urea to ammonia after excretion.

Importantly, urine and faeces, individually, emit minimal amounts of ammonia. It is the physical process of combining urine and faeces, e.g. after excretion by an animal on a floor surface, which results in ammonia volatilization. The problem is predominantly present within buildings that house livestock, i.e. barns, stables, etc. Especially in such buildings, urine and faeces contact each other extensively, as the urine cannot escape through the bottom of the floor.

Ammonia has proven to be harmful for the environment. For example, ammonia contributes to surface water eutrophication, nitrate contamination of ground water, and impaired air quality. Also, ammonia gas released into the atmosphere can react with combustion gases, i.e. nitric acid and sulphuric acid, to form ammonium nitrate or ammonium sulphate. These latter forms are the precursors for the development of fine particulate matter. These fine particulates have been shown to cause respiratory problems in humans and contribute to haze and poor visibility.

Due to the above mentioned effects, government regulations regarding ammonia emission are becoming more and more stringent. Therefore, novel ways of reducing ammonia emission by livestock, such as ammonia emission from livestock housing are sought after.

Many mechanical solutions exist, which mainly focus on separating faeces and urine or at least diminishing their contact area to prevent conversion of urea to ammonia by urease. Examples can e.g. be found in US5732658A, NL2015454B1, and EP049084A1.

US5732658A discloses a stable provided with a manure collection pit with a V-shaped bottom. Urine and faeces are collected within the V-shaped gutters. This reduces the contact area between the urine and faeces, as well as the area from which ammonia can evaporate. Moreover, the stable and gutters are flushed to further reduce ammonia emission.

NL2015454B1 discloses a floor element which comprises a number of openings that substantially allow passage of urine and/or substantially liquid excrements while solid excrements are mainly kept on the surface. Also in EP049084A1 urine and faeces are separated.

Also known are methods in which microbes or bacteria are used to reduce the presence of ammonia. EP049084A1 for example discloses covering the floor of a stable with a mixture of sawdust and bacteria for converting environmentally harmful substances to harmless substances.

The problem of ammonia emission continues when the collected manure is spread on farmland as a fertilizer. As stated in EP0424596A1, in semi-liquid manure, a large portion, mostly more than 50% of the total amount of nitrogen, is formed by ammoniacal nitrogen. Especially under alkaline circumstances, a large part of the ammoniacal nitrogen will volatize as ammonia during and after the spreading of the semi-liquid manure on the field. EP0424596A1 therefore discloses a method for processing manure, in particular for reducing nitrogen losses from manure at least after the spreading of manure on a field. In this method there is added to the manure a composition comprising at least one of the compounds calcium chloride and magnesium chloride. Particularly, this composition is added to the manure before spreading it on farmland, for example by adding the composition to the manure tank which is used to spread the manure.

In spite of the variety of solutions that are utilized in order to attempt to reduce ammonia emissions, a further reduction of ammonia emissions, especially from livestock housing is necessary. It is an objective of the present invention to reduce ammonia emissions from livestock housing facilities. It is a further objective of the present invention to reduce the ammonia emission per animal. It is an even further objective of the present invention to convert the nitrogen in ammonia from manure to solids bound nitrogen. It is an even further objective of the present invention to increase the nutritional value of manure excreted by livestock animals for use as a fertilizer, for example to improve plant growth or reduce the amount of fertilizer needed. It is an even further objective of the present invention to bind phosphates in manure, for example to prevent rinsing out of the phosphates. Further relevant documents are US 6 382 133 B1, US 6 530 343 B1, EP 2 236 024 A1, WO 2019/117710 A1.

Another harmful substance present in manure is methane. Methane is a strong greenhouse gas with a global warming potential (GWP) 104 times greater than CO₂ in a 20-year time frame. A large amount of methane is excreted by livestock, especially ruminants, in the form of burps and farts. However, methane is also present in their manure. For example for cows, up to 10% of methane excreted is in the manure. Furthermore, methane is also excreted by bacteria present in the manure, which need free phosphates for their growth. It is a further objective of the present invention to reduce methane emission from livestock housing by decreasing methane emission from manure. It is an even further objective of the present invention to reduce both methane emission as well as ammonia emission from livestock housing.

### Summary of the invention

In order to reach at least one of the objectives, the present invention discloses a method for reducing emission of ammonia from a livestock housing, the method comprising applying a composition comprising a compound that restrains ammonia volatilization onto freshly excreted manure by an animal in the livestock housing.

Although it is known from e.g. EP0424596A1 to apply calcium chloride and magnesium chloride onto manure for reducing nitrogen losses at least after the spreading of manure on a field, there is no prior art that suggests use of these compounds for reducing emission of ammonia from freshly excreted manure, i.e. application of these compounds onto manure after it has been excreted by an animal and before it has been collected in a collecting means. An example of a collecting means is a manure pit, but also collection of manure in drums or other temporary storage means such as a designated area for collecting manure falls within the definition of being collected in a collecting means. Thus, there is no prior art that suggests use of a compound that restrains ammonia volatilization at the source of the manure production.

The term livestock is commonly defined as domesticated animals raised in an agricultural setting to produce labour and commodities such as meat, eggs, milk, fur, leather, and wool. The term livestock therefore encompasses, but is not limited to: poultry, cattle, sheep, pigs, goats, horses, donkeys, mules, buffalo, oxen, llamas, camels, etc.

The term livestock housing, or livestock housing facility, entails any building which is suitable for housing animals such as, but not limited to: a barn, shed, stable, stall, outhouse, dairy cow building, poultry house, etc. Such a building may have a conventional floor surface comprising or consisting of soil, sand, clay, crushed limestone, sawdust, straw, wood, concrete, brick, tiles, asphalt, etc. or the floor surface may comprise a grid or other floor element designed to separate solid and liquid manure, such as e.g. a grid according to US5732658A or comparable, or a floor element according to NL2015454B1 or comparable, or other floor elements which may be designed for reducing ammonia emissions from livestock housing.

A compound that restrains ammonia volatilization is defined as any compound that is able to engage in a chemical reaction with ammonia, urea, or any other nitrogen containing precursor formed during the conversion of urea to ammonia by urease. Examples of such compounds are e.g. magnesium salts and chloride salts, but also other compounds such as zeolites.

As opposed to the known methods to reduce ammonia emissions from livestock housing facilities, in the method of the present invention, the composition, and therefore the compound that restrains ammonia volatilization is applied directly onto manure excreted by an animal in the livestock housing. With directly is meant, that the composition is applied onto freshly excreted manure, in other words the composition is applied before collection of the manure in a collecting means, such as a container or a manure pit. Thus, other than in known methods, whereby manure is first collected, and then only after collection, compounds are added that restrain ammonia volatilization, in the present method, the composition, and therefore the compound that restrains ammonia volatilisation is added onto the manure directly after excretion of the manure, in other words onto freshly excreted manure, i.e. the compound is added to the manure after it has been excreted by the animal and before the manure is collected in a collecting means such as a container or manure pit. In other words, in the present invention, the compound that restrains ammonia volatilization is used within a livestock housing, notably on the floor and on manure that is present on the floor, rather than only in a manure collection pit or even in fertilizer equipment moments before spreading the manure on a field as fertilizer. Thus, the compound is deposited onto freshly excreted manure. Therefore, ammonia volatilization is tackled at the source, rather than at a later moment, when contact of faeces and urine, and therefore the conversion of urea to ammonia under the influence of urease has already led to volatilization of ammonia, notably within the housing facility itself. In case application is performed by a manure scraper, a manure robot, or the like, it is to be understood that the manure may be actively displaced by the scraper, robot, or the like, before, during or after application of the composition. This is within the scope of the invention, as the composition is applied onto freshly excreted manure, but before collection of the manure. It is to be noted that also a manure pile, i.e. a stationary pile of manure in which the manure of different animals is collected, may be considered a collecting means.

It further is to be understood that liquid and semi-liquid manure may flow to some extent, which is passive displacement. Notably, in the case where the floor of the livestock housing comprises a floor design for separating urine and faeces, such as a grit or other permeable structure, liquid and semi-liquid manure may fall or flow through the openings after excretion of the manure, in which case the compound may only be directly applied onto the part of the manure that stays on the grit or permeable structure.

In addition to the effect on ammonia emission, it has furthermore surprisingly been found that the method according to the invention does not only result in a vast reduction of ammonia emission from a livestock housing, but also in a reduction of methane emission and N₂O emission.

Thus, with the method according to the invention, a vast reduction of ammonia emission may be achieved. Moreover, a reduction of methane emission may also be achieved. Finally, the retained nitrogen is a slow release fertilizer making the manure more effective for soil and crops and less damaging to the environment. The method of the invention results in a reduced amount of fertilizer needed.

### Description of embodiments

In order to prevent the escape of ammonia as much as possible, the composition should be applied to the manure as quickly as possible after excretion by the animal.

According to the invention, application of the composition is performed at least within 8 hours, more preferably within 6 hours, even more preferably within 4 hours, such as within 3 hours, within 2 hours, or within 1 hour, still even more preferably within 30 minutes, most preferably within 10 minutes of excretion of the manure by the animal.

A study by Dai et al. (PLOS ONE 9(11): e110402) has shown that in a test setup, the total ammoniacal nitrogen concentration in a mixture of faeces, urine and urease reached its final concentration after about 4 hours. In other words, in a test setup, ammonia formation appeared to be complete after about 4 hours. In a real-life setup, where faeces and urine are excreted on top of each other, but are not thoroughly mixed, results may be different and conversion of urea to ammonia will likely occur more slowly. Nevertheless, in order to prevent the escape of ammonia as much as possible, the composition should be applied to the manure as quickly as possible after excretion by the animal, and notably within 8 hours, 6 hours, or 4 hours, such as within 3 hours, 2 hours, 1 hour, 30 minutes or 10 minutes after excretion.

According to the invention, the composition is a liquid composition, more preferably an aqueous composition.

Application of the composition is performed by intermittently applying the composition onto a floor surface area of the livestock housing, thereby being applied on any manure present on the floor surface area. Preferably, applying is performed by spraying the composition. According to the invention, application is performed by continuously or intermittently applying, preferably continuously or intermittently spraying the composition onto a floor surface area of the livestock housing, thereby being applied on any manure present on the floor surface area. Spraying achieves the best coverage of the manure by the composition with a minimal amount of composition to be sprayed, and is therefore preferred over other application methods, such as pouring. Spraying devices may also be easily incorporated in the livestock housing, for example as a fixed sprinkler installation, or on a freely moving robot. Intermittently applying, and in particular spraying, i.e. applying or spraying the composition onto a particular floor surface area with regular or irregular intervals provides the advantage that the manure may be treated with the composition while the livestock, i.e. the animals, are present inside the livestock housing. The composition may for example be applied onto a floor surface area when manure is present on the floor surface area, but when an animal is present on the floor surface area, application may be ceased in order not to wet the animals.

Preferably, applying or spraying the composition onto the floor surface area is performed at regular time intervals. By using regular time intervals for application or spraying onto a floor surface area, it can be assured that the composition is applied to the manure within a preferred period after excretion, such as within 8 hours, 6 hours, or 4 hours, such as within 3 hours, 2 hours, 1 hour, 30 minutes or 10 minutes, thereby making sure that ammonia emission is reduced as much as possible. Thus, the composition may be applied onto the floor surface area every 8 hours, 6 hours, or 4 hours, such as every 3 hours, 2 hours, 1 hour, 30 minutes or 10 minutes.

Preferably, the regular time intervals are every 4 hours, more preferably every 3 hours, even more preferably every 2 hours, most preferably every 1 hour.

Alternatively, the applying or spraying, preferably spraying, of the composition onto the floor surface area is performed continuously.

More preferably the applying or spraying at regular time intervals occurs with the provision that the floor surface area to be sprayed is not occupied by an animal, human, or other object. Thus, spraying onto the floor surface area may occur when the livestock is on another surface area of the livestock housing. This prevents wetting of the animals with the composition, and avoids unnecessary use of the composition.

Suitably, application may be performed by a manure scraper equipped with a spraying device. Such a manure scraper is for example disclosed in EP2236024 A1. Thus, the manure scraper may be a device for cleaning a stable for cattle provided with at least one manure scraper blade for moving manure present on the floor to a desired location in the stable, and means for moving the manure scraper forward across the stable floor, wherein the device further comprises a spraying device. Preferably, the manure scraper is arranged in an alley in the livestock housing, for moving manure in the longitudinal direction of the alley, for example towards an opening leading to a manure collecting means, such as a manure pit. The means for moving the manure scraper forward may for example be a chain for pulling the manure scraper.

Additionally or alternatively, application of the composition may be performed by a robot, preferably a smart robot, which is freely moveable over the floor of the livestock housing. Preferably, the robot is equipped with spraying means. The robot may for example be a manure robot equipped with at least one spraying means, e.g. a spray nozzle, such as disclosed in EP 2183965 A1. Thus, the robot may be an unmanned manure vehicle, which vehicle comprises drive means for driving the vehicle and orientation means for following a path on a floor of a cattle shed, said manure vehicle being provided with a manure slide for moving manure present on the floor to a desired location in the cattle shed. The manure vehicle may be provided with at least one spraying means mounted on a side of the manure vehicle that faces the manure slide.

Additionally or alternatively, application may be performed by spraying means, such as a sprinkler installation, disposed above the floor of the livestock housing. The spraying means may for example be attached to the ceiling of the livestock housing, they may be attached to elements of the animal stalls or cubicles, or they may be mounted onto a composition transportation means, such as a tube or hose. Such means may for example be provided with openings or spray nozzles, for spraying the composition onto the floor.

Preferably, spraying the composition onto the floor surface area is performed in response to excretion of manure onto the floor surface area. This may for example be realized by the presence of sensors in, on, or above the floor surface area. The sensors may also be present on a robot or a manure scraper. Suitable sensors may be urea sensors, ammonia sensors, moisture sensors, etc. When the presence of manure on a floor surface area is sensed, then in response to that presence, the floor surface area, and therefore the present manure can be covered with the composition. This is the most optimal embodiment with respect to the amount of the composition to be used, since the composition is only applied when necessary, thereby avoiding unnecessary spillage of the composition.

On the other hand, especially when the applicating means are mounted onto a robot or a manure scraper, it may be beneficial that the composition is constantly applied by the applicating means while moving the manure, e.g. towards a manure collecting means such as a manure pit. This ensures that as much of the manure as possible is covered by the composition. While the manure is being scraped forward, manure that was on the bottom of a pile of manure may be transferred to the top of the manure pile, and constant application of the composition while moving the manure ensures that this manure is contacted by the composition as well. In other words, by constantly applying the composition while moving the manure, optimal mixing of the composition and the manure is accomplished.

Preferably, the manure and the applied composition are collected in a manure collecting means, for example an underground manure pit. More preferably additional composition is applied on the collected manure within the collecting facility. Even more preferably, the collected manure, the applied composition and the additionally applied composition are stirred within the collecting facility. The addition of additional composition in the collecting facility, especially in combination with stirring of the manure, ensures that all parts of the manure contact the composition. Thereby, the emission of ammonia is reduced even further.

A known compound that restrains ammonia volatilization is for example formaldehyde. Formaldehyde may be used in the form of so-called formalin which is an aqueous formaldehyde solution. The formaldehyde present in the formalin may react with the ammonium of the semi-liquid manure in order to form hexamethylenetetramine (HMT). HMT is known as a slow release nitrogenous fertilizer. However, formalin is toxic at even low concentrations, and is therefore not a preferred compound. Other compounds that restrain ammonia volatilization, notably by engaging in a chemical reaction with ammonia, urea or another nitrogenous ammonia precursor are zeolites, magnesium salts and calcium salts. These salts are not toxic and cause no adverse health effects to the animals, and are therefore preferred. Thus, preferred compounds that restrains ammonia volatilization are compounds that do not cause adverse health effects to the animal in the livestock housing when applied according to the method of the invention.

Preferably, the compound that restrains ammonia volatilization is chosen from the group consisting of water soluble metal salts, more preferably calcium salts, water soluble magnesium salts, and/or combinations thereof. The addition of water soluble magnesium and/or calcium salts, such as their chlorides, sulphates, carbonates, hydroxides and oxides, has previously been shown to significantly reduce ammonia volatilization from fertilizer applied to the soil surface. The reaction mechanism involves the precipitation of carbonate formed during urea hydrolysis as calcium (or magnesium) carbonate.

Moreover, soluble calcium and magnesium salts present the advantage that they contain a major element, namely calcium or magnesium respectively, a sufficient amount of which has to be present in the soil to allow a favourable growth of the crop. These two elements also contribute to an improvement of the soil structure. When manure that is treated by the method according to the invention is collected and used as a crop fertilizer, a separate calcium and magnesium fertilization is no longer strictly necessary. This results in a considerable saving of time and a reduced deterioration of soil structure due to repeated riding of heavy tractors on the field.

Preferably, the compound that restrains ammonia volatilization is a magnesium salt. Magnesium salts have the additional advantage that they can bind phosphates in manure with ammonia in the form of struvite, and other chemical complexes thereby retaining phosphates. When manure that is treated by the method according to the invention is collected and used as a crop fertilizer, the retained phosphates provide additional nutrition to the soil.

Preferably, the compound that restrains ammonia volatilization is magnesium chloride and/or magnesium sulphate. Magnesium chloride has shown to be the most effective in restraining ammonia volatilization from mixtures with manure. Magnesium sulphate on the other hand has been approved for biological farming applications. Other preferred compounds that restrain ammonia volatilization are hydrosulphates, preferably magnesium hydrosulphate.

Preferably, the composition is an aqueous solution of the compound.

The composition may comprise further active ingredients. For example, in an embodiment the composition further comprises a urease inhibitor.

Preferably, the composition further comprises an acid. Reduction of the pH results in an increase of the presence of NH₄⁺ ions at the expense of volatile NH₃ and therefore aids in the reduction of ammonia volatilization.

Preferably, the method of the invention is applied in combination with one or more other ammonia emission reducing measures. Examples of such measures are listed below.
- Floor designs for separating faeces and urine, such as slatted floors or other floor elements, e.g. such as those disclosed in NL2015454B1.
- Scrubbing of ventilation air of the livestock housing.
- Manure scrapers.
- Manure robots.
- Controlling the manure behaviour of the livestock, i.e. reducing the area on which animals defecate. Pigs for example are naturally clean animals that prefer not to defecate where they eat and sleep. The manure behaviour can be influenced with the designs of the housing.
- Cooling of the manure. By cooling manure, the rate of the ammonia emission decreases due to the decreasing activity of urease and the reduced vapour pressure of ammonia.
- Diluting of manure, for example with water.
- Addition of acid.
- Adjusting the diet of the livestock.

Preferably, the livestock housing is equipped with a floor design for separating faeces and urine and/or with scrubbers for scrubbing of ventilation air. Both of these measures, as well as the method according to the invention, can be attributed an ammonia reducing factor. The value of this factor e.g. depends on the specific floor design and/or scrubbing method used, and on the specifically used embodiment of the method of the present invention. By applying the method of the invention in combination with either of the aforementioned measures, the total emission factor of the animal housing facility can be reduced.

In the case of floor designs for separating faeces and urine, such as slatted floors, a part of the applied composition will immediately flow through the openings in the floor, which is advantageous, because the composition may then flow to the collected manure, and further reduce ammonia emission of the already collected manure.

### Brief description of the drawings

Fig. 1 displays a schematic top view of an animal housing facility in which an embodiment of the method according to the invention is performed.
Fig. 2 displays a schematic top view of an animal housing facility in which alternative embodiments of the method according to the invention are performed.
Fig. 3 displays a close up top view of the animal housing facility of Fig. 2.
Fig. 4 displays a close up top view of a further alternative embodiment for arrangement of applicating means.

### Detailed description of the invention

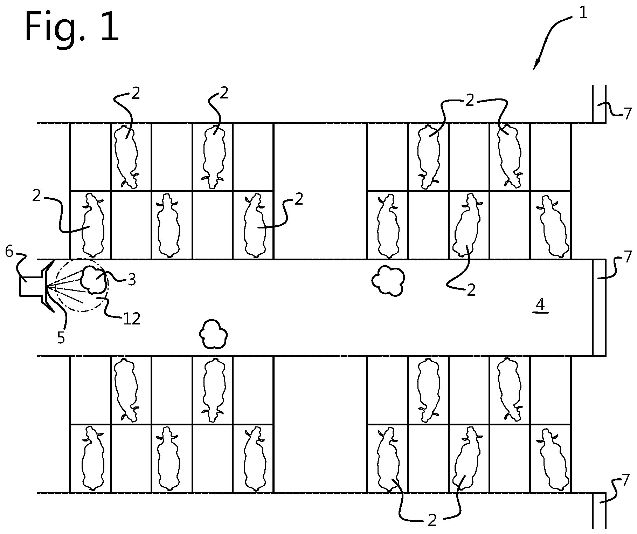

Fig. 1 is a schematic overview an embodiment of the method according to the invention. A livestock housing facility 1, such as a dairy housing, houses multiple animals 2, such as cows. The animals excrete manure 3 in alleys 4. A composition applicating means 5, in this case a spray nozzle mounted onto a manure robot 6 sprays the composition onto floor surface area 12 and onto the manure 3, after which the manure 3 is moved into the opening 7 leading to a manure collecting means, such as a manure pit, by the manure robot.

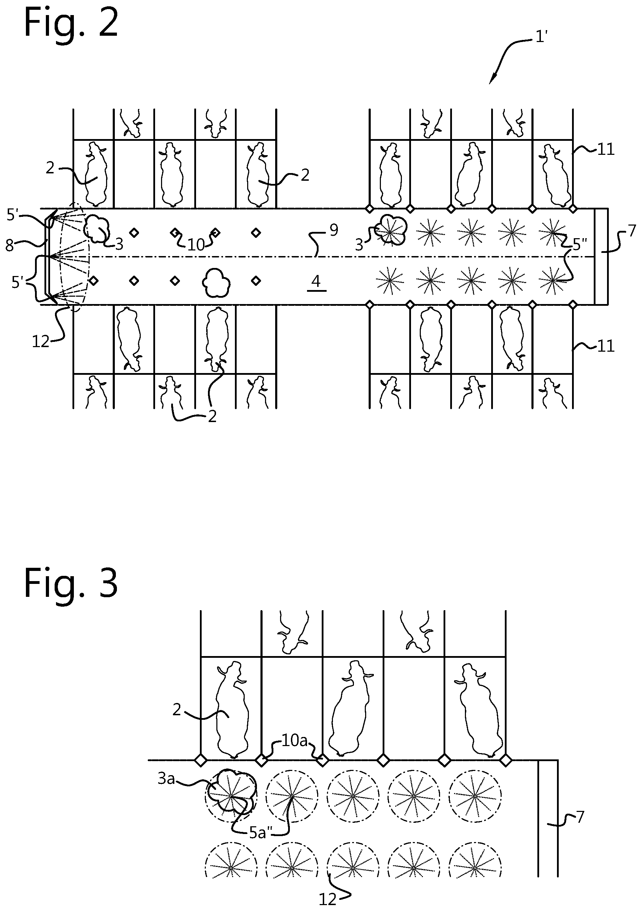

In the livestock housing facility 1' of Fig. 2, the composition is applied by applicating means 5', such as spray nozzles, mounted onto manure scraper 8 which is movable along central line 9 for moving the manure into opening 7 leading the moved manure to a manure collecting means, such as a manure pit. The composition may additionally or alternatively be applied by applicating means 5", such as spray nozzles. The applicating means 5" may be suspended above the alley 4, or they may be attached to animal stall elements 11. Furthermore, sensors 10 for sensing the presence of manure may be placed in or above the floor. The sensors may for example be suspended above the alley 4, or they may be affixed to animal stall elements 11. Also within the collecting facility, applicating means may be present.

For example, as shown in Fig. 3, in response to sensing of the presence of manure 3a by sensor 10a, both the associated applicating means 5a" suspended above the floor may be activated, thereby applicating the composition in response to excretion of the manure 3a. Alternatively, in the case the composition applicating means is mounted onto a robot such as a manure robot 6, or onto a manure scraper 8, the sensing of manure by a sensor 10 may trigger the robot or manure scraper to move towards the manure, and then activate the mounted applicating means 5 or 5' in the presence of the manure.

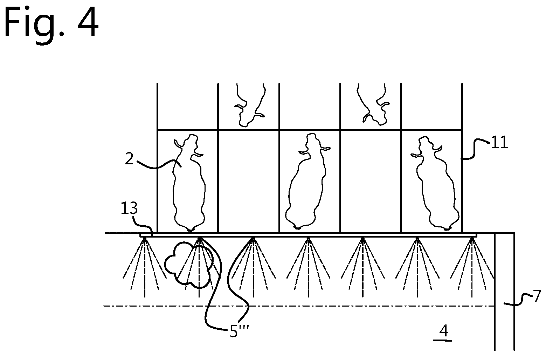

Shown in Fig. 4 is an embodiment in which applicating means 5'" are mounted in or onto a composition transportation means 13, such as a tube or hose located at a boundary between animal stall elements 11 and alley 4. A tube or hose may for example comprise openings for spraying the composition, or the tube or hose may be mounted with spray nozzles, for spraying the composition onto the floor.

As required, detailed embodiments of the present invention are disclosed herein; however, it is to be understood that the disclosed embodiments are merely exemplary of the invention, which can be embodied in various forms. Therefore, specific structural and functional details disclosed herein are not to be interpreted as limiting, but merely as a basis for the claims and as a representative basis for teaching one skilled in the art to variously employ the present invention in any appropriately detailed structure. Further, the terms and phrases used herein are not intended to be limiting, but rather, to provide an understandable description of the invention.

The terms "a"/"an", as used herein, are defined as one or more than one. The term plurality, as used herein, is defined as two or more than two. The term another, as used herein, is defined as at least a second or more. The terms including and/or having, as used herein, are defined as comprising (i.e., open language, not excluding other elements or steps). Any reference signs in the claims should not be construed as limiting the scope of the claims or the invention.

The mere fact that certain measures are recited in mutually different dependent claims does not indicate that a combination of these measures cannot be used to advantage.

### Example

100 L of mixed manure was collected from a dairy farm, and kept in a closed container at a temperature of about 3 °C to 6 °C for 6 days. After that period, the manure was mixed again before filling a sample drum with a diameter of 23,5 cm and a height of 58,5 cm (thus with a volume of 25 L) with 10 kg of the mixed cow manure. This led to a manure "height" of 22 cm and a headspace of 36,5 cm. 10.575 kg of MgCl₂ /1000L of manure was added as a 32% solution in water (25 L/1000L of manure) and thoroughly mixed with the manure before airtight closing the drum. A control drum without added MgCl₂ was also prepared.

The NH₃ and CH₄ concentration of the headspace were daily measured with an RAE-multigas meter: A measuring hose was connected to the drum and the measurement was performed for 5 minutes, until a constant value was reached. During 4 days, the NH₃ concentration measured for the sample drum was about 21 % lower than that of the control drum. Surprisingly, the measured CH₄ concentration was also reduced by about 34 % with respect to the control sample.

The experiment was repeated with addition of 2.115 kg of MgCl₂ /1000L of manure as a 32% solution in water (5 L/1000L of manure) instead of the 10.575 kg of MgCl₂ /1000L of manure. This experiment showed a reduction of the CH₄ concentration of 19% with respect to the control sample. Thus, the reduction in CH₄ emission was dependent on the MgCl₂ concentration.

The experiments are repeated with magnesium hydrosulphate. Surprisingly, the emission of NH₃ is reduced as compared to magnesium chloride.

## Claims

1. Method for reducing emission of ammonia from a livestock housing, the method comprising applying a composition comprising a compound that restrains ammonia volatilization directly onto freshly excreted manure by an animal in the livestock housing, wherein the freshly excreted manure has not been collected in a collecting means, wherein application of the composition is performed at least within 8 hours of excretion of the manure by the animal, wherein the composition is a liquid composition, and wherein application is performed by continuously or intermittently applying the composition onto a floor surface area of the livestock housing, thereby being applied on any freshly excreted manure present on the floor surface area

2. Method according to claim 1, wherein application of the composition is performed at least within 4 hours, preferably within 3 hours, more preferably within 2 hours, even more preferably within 1 hour, even more preferably within 30 minutes, most preferably within 10 minutes of excretion of the manure by the animal.

3. Method according to any one of the preceding claims, wherein application is performed by spraying.

4. Method according to claim 3, wherein applying the composition onto the floor surface area is performed at regular time intervals, preferably every 4 hours, more preferably every 3 hours, even more preferably every 2 hours, most preferably every 1 hour.

5. Method according to any one of the preceding claims, wherein application is performed by applicating means mounted on a manure scraper.

6. Method according to any one of the preceding claims, wherein application is performed by applicating means mounted on a robot, preferably a smart robot, which is freely moveable over the floor of the livestock housing.

7. Method according to any one of the preceding claims, wherein application is performed by a sprinkler installation disposed above the floor of the livestock housing.

8. Method according to any one of the preceding claims, wherein spraying the composition onto the floor surface area is performed in response to excretion of manure onto the floor surface area.

9. Method according to any one of the preceding claims, wherein the manure and the applied composition are collected in a manure collecting means, and wherein additional composition is applied on the collected manure in the collecting means.

10. Method according to any one of the preceding claims, wherein the livestock housing is equipped with a floor design for separating faeces and urine and/or with scrubbers for scrubbing of ventilation air of the livestock housing.

11. Method according to any one of the preceding claims, wherein the compound that restrains ammonia volatilization is chosen from the group consisting of water soluble calcium salts, water soluble magnesium salts, and/or combinations thereof.

12. Method according to any one of the preceding claims, wherein the compound that restrains ammonia volatilization is magnesium chloride and/or magnesium sulphate and/or magnesium hydrosulphate.

13. Method according to any one of the preceding claims, wherein the composition further comprises a urease inhibitor.

14. Method according to any one of the preceding claims, wherein the composition further comprises an acid.

## Patentansprüche

1. Verfahren zum Verringern von Ammoniakemission aus einem Viehstall, wobei das Verfahren Aufbringen einer Zusammensetzung, die eine Verbindung umfasst, die Ammoniakverflüchtigung unterdrückt, direkt auf frisch extrektierten Dung eines Tiers in dem Viehstall umfasst, wobei der frisch exkretierte Dung nicht in einem Sammelmittel gesammelt worden ist, wobei Aufbringen der Zusammensetzung wenigstens innerhalb von 8 Stunden nach der Exkretion des Dungs durch das Tier durchgeführt wird, wobei die Zusammensetzung eine flüssige Zusammensetzung ist und wobei das Aufbringen durch kontinuierliches oder intermittierendes Aufbringen der Zusammensetzung auf eine Bodenfläche des Viehstalls durchgeführt wird, um auf jeglichen frisch extretierten Dung, der auf der Bodenfläche vorhanden ist, aufgebracht zu werden.

2. Verfahren gemäß Anspruch 1, wobei das Aufbringen der Zusammensetzung wenigstens innerhalb von 4 Stunden, vorzugsweise innerhalb von 3 Stunden, bevorzugter innerhalb von 2 Stunden, noch bevorzugter innerhalb von 1 Stunde, sogar noch bevorzugter innerhalb von 30 Minuten, höchst bevorzugt innerhalb von 10 Minuten nach der Exkretion des Dungs durch das Tier durchgeführt wird.

3. Verfahren gemäß einem der vorstehenden Ansprüche, wobei das Aufbringen durch Sprühen durchgeführt wird.

4. Verfahren gemäß Anspruch 3, wobei Aufbringen der Zusammensetzung auf die Bodenoberfläche in regelmäßigen Zeitintervallen durchgeführt wird, vorzugsweise alle 4 Stunden, bevorzugter alle 3 Stunden, noch bevorzugter alle 2 Stunden, höchst bevorzugt jede 1 Stunde.

5. Verfahren gemäß einem der vorstehenden Ansprüche, wobei das Aufbringen durch Aufbringmittel durchgeführt wird, die an einem Dungschieber angebracht sind.

6. Verfahren gemäß einem der vorstehenden Ansprüche, wobei das Aufbringen durch Aufbringmittel durchgeführt wird, die an einem Roboter, vorzugsweise einem intelligenten Roboter, der frei über den Boden des Viehstalls beweglich ist, angebracht sind.

7. Verfahren gemäß einem der vorstehenden Ansprüche, wobei das Aufbringen durch eine Berieselungseinrichtung durchgeführt wird, die über dem Boden des Viehstalls angeordnet ist.

8. Verfahren gemäß einem der vorstehenden Ansprüche, wobei Sprühen der Zusammensetzung auf die Bodenfläche in Antwort auf Exkretion von Dung auf die Bodenfläche durchgeführt wird.

9. Verfahren gemäß einem der vorstehenden Ansprüche, wobei der Dung und die aufgebrachte Zusammensetzung in einem Dungsammelmittel gesammelt werden und wobei zusätzliche Zusammensetzung auf den in dem Sammelmittel gesammelten Dung aufgebracht wird.

10. Verfahren gemäß einem der vorstehenden Ansprüche, wobei der Viehstall mit einem Bodenaufbau zum Trennen von Fäzes und Urin und/oder mit Gaswäschern zum Waschen von Lüftungsluft des Viehstalls ausgestattet ist.

11. Verfahren gemäß einem der vorstehenden Ansprüche, wobei die Verbindung, die Ammoniakverflüchtigung unterdrückt, ausgewählt ist aus der Gruppe bestehend aus wasserlöslichen Calciumsalzen, wasserlöslichen Magnesiumsalzen und/oder Kombinationen davon.

12. Verfahren gemäß einem der vorstehenden Ansprüche, wobei die Verbindung, die Ammoniakverflüchtigung unterdrückt, Magnesiumchlorid und/oder Magnesiumsulfat und/oder Magnesiumhydrosulfat ist.

13. Verfahren gemäß einem der vorstehenden Ansprüche, wobei die Zusammensetzung ferner einen Ureasehemmer umfasst.

14. Verfahren gemäß einem der vorstehenden Ansprüche, wobei die Zusammensetzung ferner eine Säure umfasst.

## Revendications

1. Procédé destiné à réduire l'émission d'ammoniac d'un bâtiment d'élevage, le procédé comprenant l'application d'une composition comprenant un composé qui limite la volatilisation d'ammoniac directement sur du lisier fraîchement excrété par un animal dans le bâtiment d'élevage, dans lequel le lisier fraîchement excrété n'a pas été collecté dans un moyen de collecte, dans lequel l'application de la composition est effectuée au moins dans les 8 heures suivant l'excrétion du lisier par l'animal, dans lequel la composition est une composition liquide, et dans lequel l'application est effectuée par application continue ou intermittente de la composition sur une zone de la surface du sol du bâtiment d'élevage, étant ainsi appliquée sur tout lisier fraîchement excrété présent sur la zone de la surface du sol.

2. Procédé selon la revendication 1, dans lequel l'application de la composition est effectuée au moins dans les 4 heures, de préférence dans les 3 heures, mieux dans les 2 heures, mieux encore dans l'heure, encore mieux dans les 30 minutes, également dans les 10 minutes suivant l'excrétion du lisier par l'animal.

3. Procédé selon l'une quelconque des revendications précédentes, dans lequel l'application est effectuée par pulvérisation.

4. Procédé selon la revendication 3, dans lequel l'application de la composition sur la zone de la surface du sol est effectuée à intervalles de temps réguliers, de préférence toutes les 4 heures, mieux toutes les 3 heures, mieux encore toutes les 2 heures, idéalement chaque heure.

5. Procédé selon l'une quelconque des revendications précédentes, dans lequel l'application est effectuée par des moyens d'application montés sur un racleur à lisier.

6. Procédé selon l'une quelconque des revendications précédentes, dans lequel l'application est effectuée par des moyens d'application montés sur un robot, de préférence un robot intelligent, qui peut se déplacer librement sur le sol du bâtiment d'élevage.

7. Procédé selon l'une quelconque des revendications précédentes, dans lequel l'application est effectuée par une installation d'aspersion disposée au-dessus du sol du bâtiment d'élevage.

8. Procédé selon l'une quelconque des revendications précédentes, dans lequel la pulvérisation de la composition sur la zone de la surface du sol est effectuée en réponse à l'excrétion de lisier sur la zone de la surface du sol.

9. Procédé selon l'une quelconque des revendications précédentes, dans lequel le lisier et la composition appliquée sont collectés dans un moyen de collecte de lisier, et dans lequel une quantité supplémentaire de composition est appliquée sur le lisier collecté dans le moyen de collecte.

10. Procédé selon l'une quelconque des revendications précédentes, dans lequel le bâtiment d'élevage est équipé d'une conception de sol destinée à séparer les excréments et l'urine et/ou d'épurateurs pour l'épuration de l'air de ventilation du bâtiment d'élevage.

11. Procédé selon l'une quelconque des revendications précédentes, dans lequel le composé qui limite la volatilisation d'ammoniac est choisi dans le groupe constitué par les sels de calcium hydrosolubles, les sels de magnésium hydrosolubles, et/ou les combinaisons de ceux-ci.

12. Procédé selon l'une quelconque des revendications précédentes, dans lequel le composé qui limite la volatilisation d'ammoniac est le chlorure de magnésium et/ou le sulfate de magnésium et/ou l'hydrosulfate de magnésium.

13. Procédé selon l'une quelconque des revendications précédentes, dans lequel la composition comprend en outre un inhibiteur d'uréase.

14. Procédé selon l'une quelconque des revendications précédentes, dans lequel la composition comprend en outre un acide.
